# EUROPÄISCHE PATENTSCHRIFT

(11) **EP 2 176 681 B1**
(45) Veröffentlichungstag und Bekanntmachung des Hinweises auf die Patenterteilung: **14.05.2014**
(21) Anmeldenummer: 08774232.6
(22) Anmeldetag: 23.06.2008
(51) Int. Cl.: G01S 13/93, H01Q 1/32, H01Q 3/26, H01Q 15/08, H01Q 19/06

(54) **RADARSENSOR FÜR KRAFTFAHRZEUGE**
RADAR SENSOR FOR MOTOR VEHICLES
RADAR DÉTECTEUR POUR VÉHICULES AUTOMOBILES

(30) Priorität: 02.08.2007 DE 102007036262
(43) Veröffentlichungstag der Anmeldung: 21.04.2010
(73) Patentinhaber: Robert Bosch GmbH, 70442 Stuttgart (DE)
(72) Erfinder: FOCKE, Thomas, 31180 Ahrbergen (DE); HILSEBECHER, Joerg, 31135 Hildesheim (DE); BINZER, Thomas, 70565 Stuttgart (DE); SCHOEBERL, Thomas, 31139 Hildesheim (DE); HANSEN, Thomas, 31139 Hildesheim (DE)
(86) Internationale Anmeldenummer: PCT/EP2008/057971
(87) Internationale Veröffentlichungsnummer: WO 2009/015945

(56) Entgegenhaltungen:
- DE-A1-102004 053 419
- DE-A1-102005 033 414
- JP-A- 60 257 511
- US-A- 5 968 383
- US-A1- 2003 132 205

## Beschreibung

### Stand der Technik

Die Erfindung betrifft einen Radarsensor für Kraftfahrzeuge, mit einer Sende- und Empfangseinrichtung für Mikrowellen, und voneinander unabhängigen Strahlformungseinrichtungen, die die Richtcharakteristik der gesendeten und/oder empfangenen Mikrowellenstrahlung im Azimut und in der Elevation bestimmen, wobei die Strahlformungseinrichtung für die Elevation eine Zylinderlinse aufweist.

In Kraftfahrzeugen werden Radarsensoren im Zusammenhang mit Fahrerassistenzsystemen, beispielsweise Abstandswarn- und Regelsystemen, zur Ortung von Objekten, insbesondere von anderen Fahrzeugen, im Umfeld des eigenen Fahrzeugs eingesetzt. Gebräuchlich sind beispielsweise langreichweitige Radarsensoren (LRR), die mit einer Frequenz von etwa 77 GHz arbeiten, sowie kurzreichweitige Radarsensoren (SRR) mit einer Frequenz von 24 GHz. Wenn der Radarsensor vorn im Fahrzeug eingebaut ist und dazu dient, den Abstand zu vorausfahrenden Fahrzeugen zu messen, so hat die Strahlformungseinrichtung den Zweck, die emittierte und/oder empfangene Radarstrahlung so zu mindestens einer nach vorn gerichteten Radarkeule zu bündeln, daß die maximale Intensität und Empfindlichkeit in dem Winkelbereich erreicht wird, indem sich vorausfahrende Fahrzeuge normalerweise befinden, während weiter von der Fahrbahn entfernt liegende Objekte möglichst kein oder nur ein geringes Radarecho hervorrufen. Bei einem winkelauflösenden Radarsensor werden mehrere im Azimut aufgefächerte Radarkeulen erzeugt, so daß sich aus den Amplituden- und Phasenverhältnissen zwischen den aus den verschiedenen Keulen erhaltenen Signalen auf den Azimutwinkel des georteten Objekts schließen läßt.

Bei einer gebräuchlichen Bauform von Radarsensoren für Kraftfahrzeuge wird die Strahlformungseinrichtung durch eine sphärische Linse oder, allgemeiner, eine Linse in der Form eines Rotationskörpers gebildet, die aus einem Kunststoff mit einem für die jeweilige Frequenz der Radarstrahlung hohen Brechungsindex besteht und die Strahlung wie eine Sammellinse bündelt. Dabei wird im Azimut (in der Horizontalen) und in der Elevation (in der Vertikalen) im wesentlichen die gleiche Richtcharakteristik erreicht. Allenfalls kann es bei winkelauflösenden Radarsenoren, die mehrere nebeneinander in der Brennebene der Linse angeordneten Antennenelemente aufweisen, durch Interferenz zwischen diesen Antennenelementen zu einer gewissen Modifikation der Richtcharakteristik im Azimut kommen.

Häufig wäre es jedoch insbesondere bei langreichweitigen Radarsensoren erwünscht, die Strahlung in der Elevation stärker zu bündeln als im Azimut, so daß einerseits im Azimut ein ausreichend breites Gesichtsfeld erreicht wird, andererseits jedoch durch stärkere Bündelung in der Elevation unnötige Energieverluste vermieden werden und zugleich Störsignale durch Reflexion von der Fahrbahnoberfläche oder dergleichen besser unterdrückt werden könnten. Ein möglicher Weg, eine solche anisotrope, d. h. in der Elevation und im Azimut unterschiedliche Richtcharakteristik zu erreichen, besteht darin, komplizierte Linsensysteme mit mehreren Linsen zu verwenden. Bei Radarsensoren für Kraftfahrzeuge ist dies jedoch aus Kostengründen und aufgrund des hohen Platzbedarfes für die Linsensysteme nicht praktikabel.

Andererseits sind kompakte Radarsensoren in Planarbauweise bekannt, bei denen die Strahlformung nicht mit Hilfe optischer Linsen erfolgt, sondern vielmehr durch geeignete Wahl der Geometrie, Anordnung und Phasenlage mehrerer Antennenelemente, z. B. mit Hilfe sogenannter Gruppenantennen, Phased Arrays oder Rotman-Linsen (WO 2006/029926). Dabei läßt sich die Anordnung der Antennenelemente zwar so wählen, daß im Azimut und der Elevation unterschiedliche Richtcharakteristiken erreicht werden, doch ergibt sich dabei für die zahlreichen Antennenelemente ein hoher Platzbedarf auf einem relativ teuren Hochfrequenzsubstrat, so daß für Radarsensoren dieses Typs relativ hohe Kosten entstehen, insbesondere dann, wenn eine hochwertige Strahlformungseinrichtung realisiert werden soll, die eine symmetrische Richtcharakteristik und eine gute Unterdrückung von Nebenkeulen ermöglicht.

DE 10 2004 053 419 A1 zeigt einen Radarsensor nach dem Oberbegriff des Anspruchs 1, bei dem zur Strahlformung im Azimut eine Gruppenantenne vorgesehen ist, während die Strahlformung in der Elevation mit einer oder mehrerten Zylenderlinsen erfolgt.

DE 10 2005 033 414 A1 zeigt einen Radarsensor, bei dem das Radom im vertikalen und/oder horizontalen Querschnitt keilförmig ausgebildet ist.

### Offenbarung der Erfindung

Aufgabe der Erfindung ist es, einen kostengünstigen und kleinbauenden Radarsensor zu schaffen, der dennoch unterschiedliche Richtcharakteristiken im Azimut und in der Elevation ermöglicht.

Diese Aufgabe wird erfindungsgemäß dadurch gelöst, daß die Strahlformungseinrichtung für den Azimut eine weitere Zylinderlinse aufweist, deren Achse rechtwinklig zu der Achse der Zylinderlinse orientiert ist, die zur Strahlformung in der Elevation dient, daß die Zylinderlinsen (12, 14) plankonvex sind und daß ihre planen Ebenen einander zugewandt sind.

Die Unabhängigkeit der beiden Strahlformungseinrichtungen ermöglicht es, die Richtcharakteristik beispielsweise für die Elevation zu variieren, ohne daß dies nennenswerte Auswirkungen auf die Richtcharakteristik im Azimut hat, so daß sich beide Richtcharakteristiken auf relativ einfache Weise optimieren lassen. Die Verwendung einer Zylinderlinse zur Beeinflussung der Richtcharakteristik in der Elevation hat darüber hinaus den Vorteil, daß ein weitgehend symmetrisches Strahlprofil und eine gute Unterdrückung von Nebenkeulen erreicht wird. Dabei läßt sich eine solche Zylinderlinse relativ kostengünstig herstellen, und sie läßt sich so anordnen, daß der Radarsensor insgesamt einen relativ kompakten Aufbau erhält.

Die Zylinderlinsen können kostengünstig, wahlweise auch in einem Stück, als plankonvexe Linsen hergestellt werden und lassen sich derart Rücken an Rücken anordnen, daß sich allenfalls ein unwesentlich höherer Platzbedarf ergibt als bei einem herkömmlichen Radarsensor mit einer sphärischen Linse.

Vorteilhafte Weiterbildungen und Ausgestaltungen der Erfindung ergeben sich aus den Unteransprüchen.

### Kurze Beschreibung der Zeichnungen

Ausführungsbeispiele der Erfindung sind in den Zeichnungen dargestellt und in der nachfolgenden Beschreibung näher erläutert.

Es zeigen:
- Fig. 1: eine Prinzipskizze eines Radarsensors gemäß einer Ausführungsform der Erfindung;
- Fig. 2 und 3: abgewandelte Ausführungsformen von Linsenanordnungen bei dem Radarsensor gemäß Fig. 1;
- Fig. 4 und 5: Richtcharakteristiken des Radarsensors nach Fig. 1 im Azimut bzw. in der Elevation;

### Ausführungsformen der Erfindung

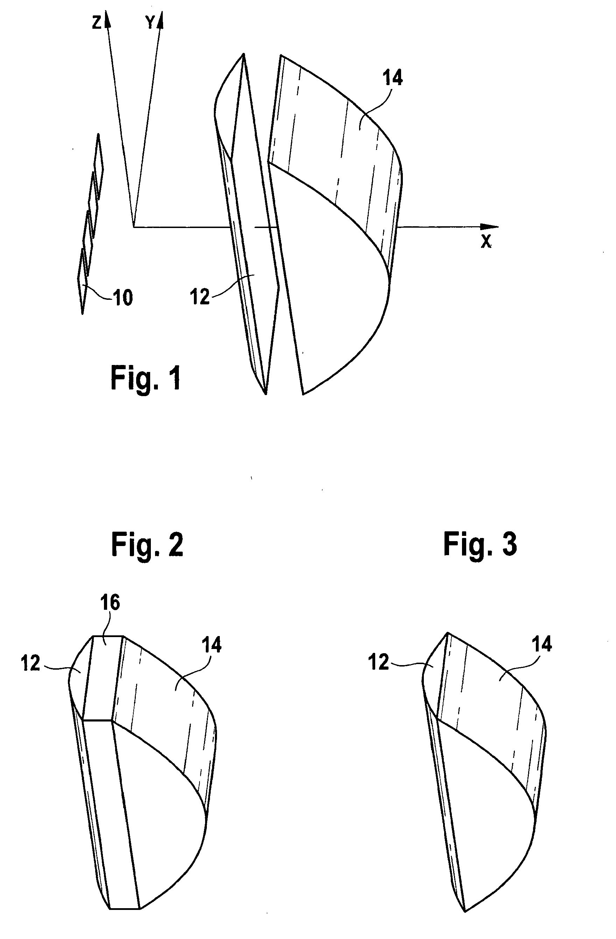

In Fig. 1 sind die wesentlichen Elemente eines Radarsensors dargestellt, der beispielsweise als langreichweitiger Abstandssensor in einem Kraftfahrzeug eingesetzt werden soll. Der Radarsensor weist vier Antennenelemente 10 auf, die in einer horizontalen Richtung Y quer zur Längsrichtung des Fahrzeugs nebeneinander angeordnet sind. Diese Antennenelemente 10 dienen sowohl als Sendeantennen wie auch als Empfangsantennen (monostatisches Antennenkonzept) und sind in bekannter Weise mit nicht gezeigten Hochfrequenz-Schaltungselementen verbunden, die es erlauben, Mikrowellenleistung, beispielsweise mit einer Frequenz von 77 GHz, in jedes einzelne Antennenelement 10 einzuspeisen und das von diesem Element empfangene Radarecho mit einem Teil der eingespeisten Leistung zu mischen und so ein Zwischenfrequenzsignal auszukoppeln, das den Frequenzunterschied zwischen gesendetem und empfangenem Signal angibt. Aus diesem Zwischenfrequenzsignal lassen sich dann durch Modulation der gesendeten Frequenzen nach dem Prinzip eines FMCW-Radar (Frequency Modulated Continious Wave) die Abstände und Relativgeschwindigkeiten der georteten Objekte bestimmen.

Die vier Antennenelemente 10 können mit frequenz- und phasengleichen Signalen gespeist werden, können jedoch wahlweise auch bei leicht unterschiedlichen Frequenzen arbeiten, so daß der Einfluß von Interferenzeffekten auf die Richtcharakteristik unterdrückt wird. Durch getrennte Auswertung der von den vier Antennenelementen empfangenen Signale und Vergleich der jeweiligen Amplituden und Phasen läßt sich der Richtungswinkel (Azimutwinkel) der georteten Objekte in der durch die Y-Achse und die in Fahrzeuglängsrichtung verlaufende X-Achse aufgespannten Ebene berechnen. Das Winkelauflösungsvermögen ist dabei von der Richtcharakteristik der gesendeten und empfangenen Radarstrahlung im Azimut abhängig.

In Abstand vor der Ebene der Antennenelemente 10 sind zwei plankonvexe Zylinderlinsen 12, 14 angeordnet, die aus einem Kunststoff mit einem für die Radarstrahlung relativ hohen Brechindex hergestellt sind. Die Zylinderlinse 12 ist mit ihrer Achse in Z-Richtung (senkrecht) orientiert und dient somit im gezeigten Beispiel zur Bündelung der Radarstrahlung und damit zur Bestimmung der Richtcharakteristik im Azimut (in der Horizontalen). Die Zylinderlinse 14 ist mit ihrer Achse horizontal (in Y-Richtung) orientiert und dient somit zur Bestimmung der Richtcharakteristik in der Elevation.

Der Abstand zwischen den Zylinderlinsen 12, 14 einerseits und den Antennenelementen 10 andererseits kann gleich, etwas größer oder etwas kleiner sein als die Brennweite der betreffenden Linse.

Die beiden Zylinderlinsen 12, 14 sind im gezeigten Beispiel Rücken an Rücken angeordnet, so daß ihre Scheitel in entgegengesetzte Richtungen weisen. Die Zylinderlinse 14, deren Scheitel von den Antennenelementen 10 abgewandt ist, kann als aplanatische Linse konfiguriert sein, d. h. als eine Linse, die weitgehend frei von sphärischer Aberration ist.

Wenn die beiden Linsen, wie in Fig. 1, getrennt ausgebildet sind, können sie aus unterschiedlichen Materialien bestehen und folglich auch unterschiedliche Brechungsindizes aufweisen. Im allgemeinen werden die beiden Linsen unterschiedliche Brennweiten haben. So ist es beispielsweise möglich, die Radarkeulen mit Hilfe der Zylinderlinse 14 in der Elevation stärker zu bündeln als sie mit Hilfe der Zylinderlinse 12 im Azimut gebündelt werden. Die stärkere Bündelung in der Elevation erlaubt es, Störsignale zu vermeiden, die bei zu weiter Radarkeule durch Rückstreuungen von Streuzentren auf der Fahrbahnoberfläche verursacht werden. Andererseits läßt sich die Richtcharakteristik im Azimut mit Hilfe der Zylinderlinse 12 so einstellen, daß die Radarkeulen der vier Antennenelemente 10 die gesamte relevante Fahrbahnbreite überstreichen, so daß, jedenfalls in einem für die Ortung von vorausfahrenden Fahrzeugen relevanten Abstandsbereich, sämtliche Fahrzeuge in der eigenen Spur und auch auf Nebenspuren lückenlos geortet werden können, andererseits jedoch Radarechos von irrelevanten Objekten links und rechts neben der Fahrbahn weitgehend vermieden werden.

Da die einzelnen Antennenelemente 10 unterschiedlich weit gegenüber der optischen Achse der zylinderlinse 12 versetzt sind, erzeugen sie zusammen mit der zylinderlinse 14 Radarkeulen, die sich in ihrer Hauptabstrahlrichtung etwas voneinander unterscheiden. Die dadurch verursachten Unterschiede in dem von den verschiedenen Antennenelementen empfangenen Signalen ermöglichen die Bestimmung der Azimutwinkel der Objekte. Da die für die Bündelung in der Elevation zuständige Zylinderlinse 14 in der Y-Richtung ein konstantes Profil aufweist, hat sie kaum einen Einfluß auf die Form der Radarkeulen im Azimut.

In dem in Fig. 1 gezeigten Beispiel sind die beiden Zylinderlinsen 12, 14 mit ihren planen, einander zugewandten Flächen in Abstand zueinander angeordnet. Fig. 2 zeigt ein modifiziertes Beispiel, bei dem dieser Abstand zwischen den beiden Zylinderlinsen durch einen quaderförmigen Füllkörper 16 ausgefüllt ist, der die optischen Eigenschaften der Linsenanordnung nicht nennenswert beeinflußt.

Fig. 3 zeigt ein Beispiel, bei dem die beiden Zylinderlinsen 12, 14 mit ihren planen Flächen unmittelbar aneinander anliegen. Im Fall der Figuren 2 und 3 können die beiden Zylinderlinsen 12, 14 und gegebenenfalls der Füllkörper 16 auch in einem Stück hergestellt sein.

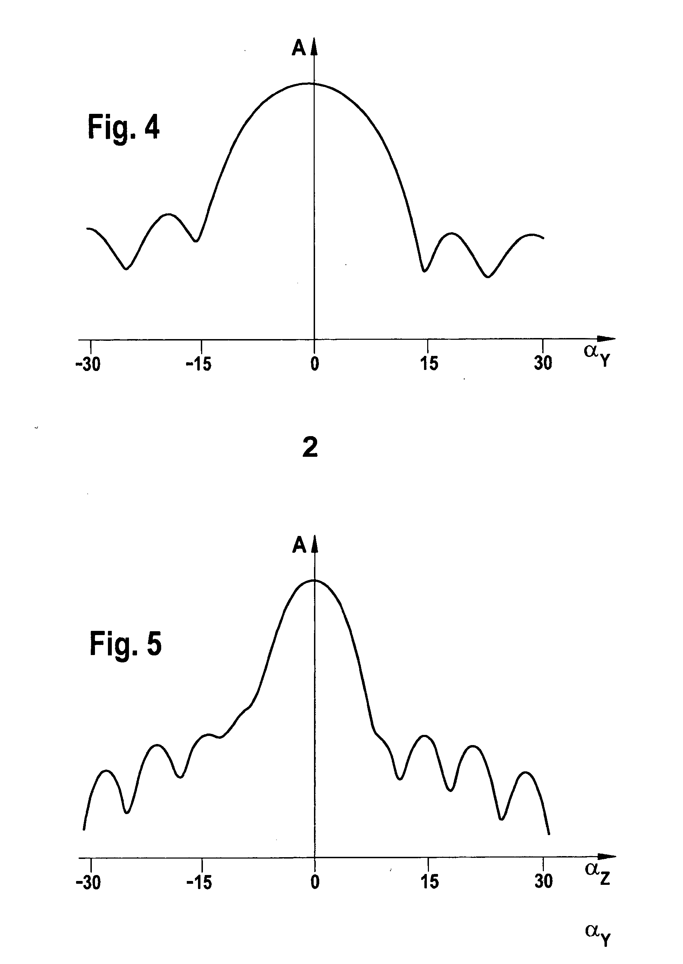

Für einen Radarsensor mit dem in Figuren 1 bis 3 gezeigten prinzipiellen Aufbau zeigt Fig. 4 ein Beispiel für eine Richtcharakteristik im Azimut (in der Horizontalen). Die Amplitude A des gesendeten Signals (oder analog die Empfindlichkeit für das empfangene Signal) ist hier gegen den Azimutwinkel α_{Y} im Bereich von ±30° aufgetragen. Man erkennt, daß die Hauptkeule eine Breite von etwa ±15° aufweist, was eine gute Überwachung der Fahrbahn und zugleich ein ausreichendes Winkelauflösungsvermögen erlaubt.

Fig. 5 zeigt zum vergleich die Richtcharakteristik desselben Radarsensors in der Elevation. Hier ist die Amplitude A gegen den Elevationswinkel α_{Z} im Bereich von ±30° aufgetragen. Man erkennt, daß die Hauptkeule symmetrisch zur Elevation von 0° liegt und eine deutlich geringere Breite von etwa ±10° aufweist. Nebenkeulen werden dabei gut unterdrückt, so daß der Radarsensor gegenüber Störreflexen von der Fahrbahnoberfläche weitgehend unempfindlich ist. Wenn zur Strahlformung in der Elevation anstelle einer Zylinderlinse beispielsweise ein Phased Array eingesetzt würde, ließe sich eine Richtcharakteristik mit in Fig. 5 gezeigten Eigenschaften nicht oder allenfalls mit sehr hohem Aufwand erreichen.

## Patentansprüche

1. Radarsensor für Kraftfahrzeuge, mit einer Sende- und Empfangseinrichtung (10) für Mikrowellen, und voneinander unabhängigen Strahlformungseinrichtungen (12, 14), die die Richtcharakteristik der gesendeten und/oder empfangenen Mikrowellenstrahlung im Azimut und in der Elevation bestimmen, wobei die Strahlformungseinrichtung für die Elevation eine Zylinderlinse (14) aufweist, **dadurch gekennzeichnet, daß** die Strahlformungseinrichtung für den Azimut eine weitere Zylinderlinse (12) aufweist, deren Achse rechtwinklig zu der Achse der Zylinderlinse (14) orientiert ist, die zur Strahlformung in der Elevation dient, daß die Zylinderlinsen (12, 14) plankonvex sind und daß ihre planen Ebenen einander zugewandt sind.

2. Radarsensor nach Anspruch 1, **dadurch gekennzeichnet, daß** zwischen den planen Ebenen der Zylinderlinsen (12, 14) ein quaderförmiges Zwischenstück (16) eingefügt ist.

3. Radarsensor nach Anspruch 1, **dadurch gekennzeichnet, daß** die Zylinderlinsen (12, 14) mit ihren planen Ebenen unmittelbar aneinander anliegen.

4. Radarsensor nach einem der Ansprüche 1 bis 3, **dadurch gekennzeichnet, daß** die beiden Zylinderlinsen (12, 14) in einem Stück ausgebildet sind.

5. Radarsensor nach einem der vorstehenden Ansprüche, **dadurch gekennzeichnet, daß** mindestens eine Zylinderlinse (12, 14) als aplanatische Linse konfiguriert ist.

## Claims

1. Radar sensor for motor vehicles, having a transmit and receive device (10) for microwaves, and mutually independent beam-shaping devices (12, 14) which determine the directional characteristic of the transmitted and/or received microwave radiation in azimuth and in elevation, the beam-shaping device having a cylindrical lens (14) for the elevation, **characterized in that** the beam-shaping device for the azimuth has a further cylindrical lens (12) whose axis is orientated at right angles to the axis of the cylindrical lens (14) which serves for beam-shaping in elevation, **in that** the cylindrical lenses (12, 14) are planoconvex, and **in that** their flat planes face one another.

2. Radar sensor according to Claim 1, **characterized in that** a cuboidal spacer (16) is inserted between the flat planes of the cylindrical lenses (12, 14).

3. Radar sensor according to Claim 1, **characterized in that** the cylindrical lenses (12, 14) make direct contact with one another at their flat planes.

4. Radar sensor according to one of Claims 1 to 3, **characterized in that** the two cylindrical lenses (12, 14) are designed in one piece.

5. Radar sensor according to one of the preceding claims, **characterized in that** at least one cylindrical lens (12, 14) is configured as an aplanatic lens.

## Revendications

1. Capteur radar pour véhicule automobile, le capteur présentant n dispositif (10) d'émission et de réception de microondes et des dispositifs (12, 14) mutuellement indépendants de formation de faisceau qui définissent la caractéristique d'orientation en azimut et en élévation du rayonnement de microondes émis et/ou reçu,
le dispositif de formation de faisceau prévu pour l'élévation présentant une lentille cylindrique (14), **caractérisé en ce que**
le dispositif de formation de faisceau prévu pour l'azimut présente une autre lentille cylindrique (12) dont l'axe est orienté perpendiculairement à l'axe de la lentille cylindrique (14) qui sert à la formation du faisceau en élévation,
**en ce que** les lentilles cylindriques (12, 14) sont plan-convexes et
**en ce que** leurs plans sont tournés l'un vers l'autre.

2. Capteur radar selon la revendication 1, **caractérisé en ce qu'**une pièce intermédiaire (16) de forme parallélépipédique est insérée entre les deux plans des lentilles cylindriques (12, 14).

3. Capteur radar selon la revendication 1, **caractérisé en ce que** les lentilles cylindriques (12, 14) reposent l'une contre l'autre directement par leur plan.

4. Capteur radar selon l'une des revendications 1 à 3, **caractérisé en ce que** les deux lentilles cylindriques (12, 14) sont réalisées en une seule pièce.

5. Capteur radar selon l'une des revendications précédentes, **caractérisé en ce qu'**au moins une lentille cylindrique (12, 14) est configurée comme lentille non plane.
